# EUROPÄISCHE PATENTSCHRIFT

(11) **EP 3 573 023 B1**
(45) Veröffentlichungstag und Bekanntmachung des Hinweises auf die Patenterteilung: **09.09.2020**
(21) Anmeldenummer: 19164316.2
(22) Anmeldetag: 21.03.2019
(51) Int. Cl.: G06T 7/593, G06T 7/285, G01P 5/00

(54) **VERFAHREN ZUR BESTIMMUNG RÄUMLICHER INFORMATIONEN EINER GASFÖRMIGEN STRUKTUR**
METHOD FOR DETERMINING SPATIAL INFORMATION IN A GASEOUS STRUCTURE
PROCÉDÉ DE DÉTERMINATION DES INFORMATIONS SPATIALES D'UNE STRUCTURE GAZEUSE

(30) Priorität: 24.05.2018 DE 102018112479
(43) Veröffentlichungstag der Anmeldung: 27.11.2019
(73) Patentinhaber: Universität Kassel, 34125 Kassel (DE)
(72) Erfinder: KROLL, Andreas, 34131 Kassel (DE); RANGEL, Johannes, 34119 Kassel (DE)
(74) Vertreter: Patentanwälte Walther Hinz Bayer PartGmbB

(56) Entgegenhaltungen:
- WO-A1-2008/116037
- DE-A1-102011 055 665
- US-A1- 2004 175 040
- US-A1- 2013 235 163
- US-A1- 2018 096 482
- RANGEL JOHANNES ET AL: "On Obtaining Reliable Spatial Information from Gas Structures with a Stereo Camera System", 2018 12TH INTERNATIONAL CONFERENCE ON SENSING TECHNOLOGY (ICST), IEEE, 4. Dezember 2018 (2018-12-04), Seiten 1-6, XP033493559, DOI: 10.1109/ICSENST.2018.8603631 [gefunden am 2019-01-04]
- RANGEL JOHANNES ET AL: "Characterization and calibration of a stereo gas camera system for obtaining spatial information of gas structures", 2018 IEEE SENSORS APPLICATIONS SYMPOSIUM (SAS), IEEE, 12. März 2018 (2018-03-12), Seiten 1-6, XP033345743, DOI: 10.1109/SAS.2018.8336741 [gefunden am 2018-04-11]

## Beschreibung

Die Erfindung betrifft ein Verfahren zur Bestimmung räumlicher Informationen einer gasförmigen Struktur und eine Vorrichtung hierzu, wobei die gasförmige Struktur insbesondere durch eine Gaswolke gebildet wird, und wobei das Verfahren mit wenigstens einer bereitgestellten Kamera ausgeführt wird.

### STAND DER TECHIK

Bei der Bestimmung von räumlichen Informationen über gasförmige Strukturen, beispielsweise von Gaswolken, handelt es sich vordergründig um die Bestimmung von Ort und Ausdehnung und die Verfolgung ausgetretener Gasen in Folge von beispielsweise Störungen oder Havarien von Prozessanlagen, etwa in der Chemieindustrie, aber auch in Stahlwerken, Kraftwerken oder anderen Anlagen, die mit gasförmigen Stoffen arbeiten. Weiterhin kann ein solches Verfahren angewendet werden zur Inspektion von Anlagen und Einrichtungen, die im Regelfall nicht ganz gasdicht sind, um Gasleckagen zu charakterisieren und zu bewerten, wie diese beispielsweise bei Biogasanlagen, Stallungen oder unabgedeckten Lagerstätten von Gärresten und Gülle auftreten können. Zudem können mutwillige oder unfallbedingte Gasfreisetzungen im öffentlichen Raum detektiert und verfolgt werden. Damit wird insbesondere das Ziel verfolgt, Einsatzkräfte bei der Einschätzung einer Gefahrenlage durch freigesetzte Gase zu unterstützen und entsprechende Maßnahmen abzuleiten zu können, sodass das Verfahren möglichst mit wenig technischem Aufwand und schnell durchgeführt werden kann.

Beispielsweise offenbart die US 2013/0235163 A1 ein Stereo-System basierend auf zwei Infrarot-Kameras, um Tiefeninformationen über hauptsächlich opake Objekte abzuleiten. Hierbei werden zunächst die Konturen der aufgenommenen Objekte mit Hilfe eines Kantendetektionsverfahrens extrahiert. Dabei wird vorausgesetzt, dass die aufgenommenen Objekte einen ausreichenden Temperaturkontrast zum Hintergrund aufweisen. Nachfolgend wird ein lokales Stereo-Matching-Verfahren zur Bestimmung der räumlichen Informationen der opaken Objekte anhand der Konturen angewendet. Die Ableitung räumlicher Informationen über semitransparente dynamische Objekte und Strukturen wie sich bewegendes Gas und dergleichen wird in diesem Verfahren jedoch nicht offenbart. Insbesondere entsteht jedoch der Nachteil, dass für die Gaserkennung ein zuvor bekannter Hintergrund vorhanden sein muss, was unter Realbedingungen und plötzlich auftretenden Gasaustritten nicht grundsätzlich gegeben ist.

In J. Rangel and A. Kroll, "Characterization and Calibration of a Stereo Gas Camera System for Obtaining Spatial Information of Gas Structures", in IEEE Sensors Applications Symposium (SAS), Seoul, Korea, 2018 wird ein Stereo-Kamerasystem basierend auf zwei Infrarotkameras zur Gasvisualisierung verwendet, um Tiefeninformationen über Methanwolken unter Laborbedingungen zu gewinnen, wobei ein Stereo-Matching-Verfahren auf Differenzbildern verwendet wird. Die Robustheit des verwendeten Verfahrens bei unkontrollierten Bedingungen, beispielsweise im Freifeld, kann in Frage gestellt werden, da keine weiteren Merkmale der Gaswolke neben den Differenzbildern zur Segmentierung der Wolke und Korrespondenzbestimmung betrachtet werden.

Die Gewinnung von räumlichen Informationen über semi-transparente Strukturen wie Gaswolken unter realen unkontrollierbaren Bedingungen anhand von Bildpaaren stellt daher eine komplexere Aufgabe dar, welche die Extrahierung, Detektion und Fusionierung von charakteristischen Informationen über die Gaswolke benötigt, um diese vom Hintergrund zu segmentieren und Tiefeninformationen daraus abzuleiten.

### OFFENBARUNG DER ERFINDUNG

Aufgabe der Erfindung ist die verbesserte Bestimmung von gasförmigen Strukturen hinsichtlich ihrer räumlichen Informationen mit Größen- und Entfernungsinformationen und insbesondere zusätzlich mit Bewegungsinformation. Die zum Ausführen des Verfahrens notwendige Vorrichtung soll dabei einfach ausgeführt und bedienbar sein. Insbesondere ist es wünschenswert, das Verfahren unabhängig von einem Hintergrund der gasförmigen Struktur ausführen zu können.

Diese Aufgabe wird ausgehend von einem Verfahren gemäß dem Oberbegriff des Anspruches 1 und ausgehend von einer Vorrichtung gemäß dem Oberbegriff des Anspruches 8 mit den jeweils kennzeichnenden Merkmalen gelöst. Vorteilhafte Weiterbildungen der Erfindung sind in den abhängigen Ansprüchen angegeben.

Das erfindungsgemäße Verfahren zur Bestimmung räumlicher Informationen umfassend Bewegungsinformationen einer gasförmigen Struktur umfasst wenigstens die folgenden Schritte: Bereitstellen einer ersten Kamera zur Aufnahme der gasförmigen Struktur aus einer ersten Aufnahmeachse und einer zweiten Kamera zur Aufnahme der gasförmigen Struktur aus einer zweiten Aufnahmeachse oder alternativ das Bereitstellen einer einzigen Kamera mit einem Strahlteiler, über den die gasförmige Struktur aus der ersten Aufnahmeachse und der zweiten Aufnahmeachse aufgenommen wird; Erfassen eines ersten Aufnahmebildes aus Richtung der ersten Aufnahmeachse und eines zweiten Aufnahmebildes aus Richtung der zweiten Aufnahmeachse; Vorfilterung der Aufnahmebilder, wobei wenigstens ein Bildrauschen und/oder weitere Störeffekte aus den Aufnahmebildern reduziert werden; Ableiten von Merkmalen über die gasförmige Struktur aus den Aufnahmebildern mittels a) Differenzbildern umfassend pixelweise zeitliche Konzentrationsänderungen in der gasförmigen Struktur und b) Bildern des Betrags des optischen Flusses umfassend räumliche Konzentrationsverschiebungen in der gasförmigen Struktur; Fusionieren und Bestimmen der Korrespondenzen der abgeleiteten Merkmale mittels einer Korrespondenzbestimmung und Erzeugen eines Disparitätsbildes und Ableiten einer Bewegungsinformation über die gasförmige Struktur aus der räumlichen Information anhand des Disparitätsbildes.

Die Ableitung räumlicher Informationen über gasförmige Strukturen aus den gelieferten Bildpaaren basiert auf der geometrischen Beziehung zwischen dem Messobjekt und dem Messsystem, der sogenannten Epipolargeometrie, und der Annahme, dass ähnliche Gasstrukturen in beiden Aufnahmebildern zu sehen sind.

Gasförmige Strukturen, Gase bzw. Gaswolken umfassen im Sinne der vorliegenden Erfindung Gase im eigentlichen Sinne ebenso wie Gase, in denen Partikel, Aerosole und dergleichen vorhanden sind, also auch Rauch und Dampf.

Wird die Gaswolke von den Kameras aufgenommen, hebt sie sich vom Hintergrund ab, wenn ihre Temperatur von der Temperatur des Hintergrundes abweicht. Je größer die Temperaturdifferenz und je größer die Gaskonzentration, desto stärker hebt sie sich ab. Erscheint die Gaswolke dann in beiden Aufnahmebildern, kann die Position des Ortes der mittleren Gaskonzentration im Messpfad innerhalb der Gaswolke bestimmt werden, wenn die entsprechenden Projektionen des Ortes in den beiden Aufnahmebildern eine entsprechende Ähnlichkeit aufweisen. Diese Eigenschaft wird auch als Fotokonsistenz bezeichnet und gilt im visuellen Bereich für die meisten opaken Objekte.

Im Falle von gasförmigen Strukturen, die zum Teil Strahlung transmittieren, kann vom Vorliegen der Fotokonsistenz ausgegangen werden, wenn der Hintergrund der Gaswolke homogen und der Transmissionsgrad der Gaswolke auf den Aufnahmeachsen gleich ist. Diese letzte Annahme trifft vor allem bei Gasstrukturen mit einer symmetrischen oder fast symmetrischen Geometrie zu, wie beispielsweise bei einem Freistrahl, einem sogenannten Jet. Damit können intrinsische charakteristische Informationen über die Gaswolke aus den Bildpaaren durch einen Algorithmus in einem Computersystem extrahiert werden.

Dazu werden das Rauschen und weitere Störeffekte, insbesondere sogenannte Jitter, in den Aufnahmebildern mit einer Vorfilterung reduziert. Nachfolgend werden die zeitlichen Konzentrationsänderungen in der Gaswolke mit Differenzbildern und die räumlichen Konzentrationsverschiebungen in der Gaswolke mit dem Betrag des optischen Flusses pro Bildeinheit beziehungsweise pro Pixel abgeleitet. Diese charakteristischen Informationen gestatten sodann eine Unterscheidung der Gaswolke vom Hintergrund, ohne den Hintergrund selbst vorher zu bestimmen, und erleichtern das Finden von Korrespondenzen in den Stereo-Bildern. Folgerichtig kann das Verfahren auch bei unbekanntem Hintergrund eingesetzt werden.

Die gewonnenen Daten werden nachfolgend in einer so genannten globalen Zielfunktion über alle Pixel des Bildes durch eine gewichtete Addition fusioniert, was mit der Fusionieren und dem Bestimmen der Korrespondenzen der abgeleiteten Merkmale mittels der Korrespondenzbestimmung beschrieben wird. Dieses Matching erfolgt über eine Minimierung der Zielfunktion. Das Ergebnis ist eine Zuordnung von korrespondierenden Pixeln aus jedem Bildpaar in Form eines sogenannten Disparitätsbildes. Anhand dieses Disparitätsbildes und der durch eine geometrische Kalibrierung gewonnenen Kalibrierparameter werden räumliche Informationen über die Gaswolke, die sich innerhalb der Gaswolke befinden, abgeleitet.

Im Ergebnis können aus den räumlichen Informationen der Abstand zur Gaswolke und die Bewegungsrichtung der Gaswolke bestimmt werden. Da die räumlichen Informationen für jedes neue Bildpaar der Kamera, also Pixel für Pixel, neu generiert werden, kann die Position und Form der Gaswolke wie auch deren zeitliche Änderung verfolgt werden. Damit können auch Aussagen zur Höhe und Breite der Wolke aus der Messrichtung des Messsystems getroffen werden.

Das erfindungsgemäße Verfahren kann für verschiedene Gase und Gasgemische sowie verschiedene Kameratechnologien beziehungsweise Wellenlängenbereiche eingesetzt werden, da das Verfahren auf intrinsischen Eigenschaften turbulenter Gasströmungen basiert. Dies schließt zum Beispiel den mittel- und langwelligen Bereich des Infrarotspektrums ein, in dem umweltrelevante und teilweise auch giftige Gase wie CH4, CO2, NH3 oder SF6 Infrarotstrahlung absorbieren. Weiterhin kann das vorgeschlagene Messsystem im Innen- und Außenbereich und auch unter unkontrollierten Messbedingungen eingesetzt werden, da das vorgestellte Verfahren den Einfluss des Gashintergrundes unterdrückt und so auch bei extremen Störeinflüssen funktionieren kann.

Vorteilhafterweise wird durch das Ableiten der räumlichen Information umfassend die Bewegungsinformation über die gasförmige Struktur die Echtzeitposition der gasförmigen Struktur relativ zur wenigstens einen Kamera bestimmt. Diese Bestimmung erfolgt dabei mittels Differenzbildern und mittels optischen Flussbildern und der daraus abgeleiteten Merkmale über die gasförmige Struktur aus den Aufnahmebildern, und zwar ohne die Betrachtung des Hintergrundes der gasförmigen Struktur.

Das Fusionieren und Bestimmen der Korrespondenzen der abgeleiteten Merkmale wird insbesondere mittels der globalen Zielfunktion zwischen den Aufnahmebildern für alle Pixel der Aufnahmebilder numerisch mit einem Computersystem vorgenommen. Das Verfahren wird folglich in zwei Schritte unterteilt, nämlich zum einen das Bereitstellen und Einrichten der wenigstens einen Kamera und zum anderen das Bereitstellen des Computersystems, um die Schritte des Erfassens der Aufnahmebilder, die Vorfilterung, das Ableiten von Merkmalen, das Fusionieren und Bestimmen der Korrespondenzen und der abgeleiteten Merkmale und schließlich das Ableiten der räumlichen Information umfassend die Bewegungsinformation durchzuführen.

Die Korrespondenzbestimmung vorzugsweise anhand der globalen Zielfunktion wird mit weiterem Vorteil aus einer Summe einer erstellten Kostenfunktion und einer definierten Regularisierungsfunktion bestimmt, abhängig von einer Zuordnung von aus den Aufnahmebildern korrespondierenden Pixeln.

Die Kostenfunktion wird nach der Annahme gebildet, dass ähnliche Merkmale, d. h. zeitliche Konzentrationsänderungen und räumliche Konzentrationsverschiebungen, zwischen den zugehörigen Stereo-Bildern pixelweise zu finden sind. Dazu werden in der Kostenfunktion die Konzentrationsänderungen und Konzentrationsverschiebungen pro Stereo-Bild pixelweise gewichtet addiert und miteinander verglichen. Eine sehr geringe Differenz zwischen den Merkmalen aus dem Stereo-Bildpaar entspricht einer sehr hohen Ähnlichkeit. Die Regularisierungsfunktion wird gewählt, sodass das nach der Minimierung der Zielfunktion resultierende Disparitätsbild einen glatten Verlauf aufweist.

Die Erfindung richtet sich weiterhin auf eine Vorrichtung zur Bestimmung räumlicher Informationen umfassend Bewegungsinformationen einer gasförmigen Struktur, insbesondere einer Gaswolke, aufweisend eine erste Kamera zur Aufnahme der gasförmigen Struktur aus einer ersten Aufnahmeachse und aufweisend eine zweite Kamera zur Aufnahme der gasförmigen Struktur aus einer zweiten Aufnahmeachse oder alternativ hierzu aufweisend eine einzige Kamera mit einem Strahlteiler, über den die gasförmige Struktur aus der ersten Aufnahmeachse und der zweiten Aufnahmeachse aufnehmbar ist, wobei die Vorrichtung weiterhin ein Computersystem aufweist, das mit der wenigstens einen Kamera in Verbindung steht und auf dem das vorstehend beschriebene Verfahren ausführbar ist.

Die Vorrichtung wird insbesondere nach Art der Epipolargeometrie eingerichtet und betrieben, da der Abstand zwischen den beiden Kameras bekannt ist, und somit ist auch der Winkel und der Abstand zwischen den beiden Aufnahmeachsen zur Erfassung der Aufnahmebilder bekannt. Über diese Epipolargeometrie kann folglich der Abstand zur gemessenen Gaswolke bestimmt werden.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: eine schematische Ansicht einer Vorrichtung zur Ausführung des erfindungsgemäßen Verfahrens am Beispiel von zwei beabstandet zueinander angeordneten Kameras relativ zu einer gasförmigen Struktur und
- Figur 2: eine diagrammatische Ansicht des Verfahrensablaufs mit einer Darstellung der einzelnen Verfahrensschritte.

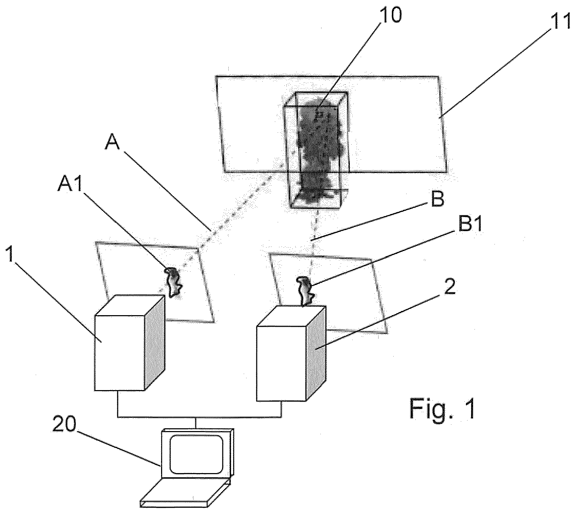

Figur 1 zeigt in einer schematisierten Darstellung eine gasförmige Struktur 10 vor einem Hintergrund 11, und zur Bestimmung räumlicher Informationen umfassend die Bestimmung von Bewegungsinformationen sind eine erste Kamera 1 und eine zweite Kamera 2 vorgesehen, die mit einem Computersystem 20 in Verbindung stehen.

Mit der ersten Kamera 1 kann in einer ersten Aufnahmeachse A ein erstes Aufnahmebild A1 aufgenommen werden, und mit der zweiten Kamera 2 kann in einer zweiten Aufnahmeachse B ein zweites Aufnahmebild B1 aufgenommen werden. Der vorgegebene Abstand zwischen den beiden Kameras 1 und 2 ist dabei bekannt.

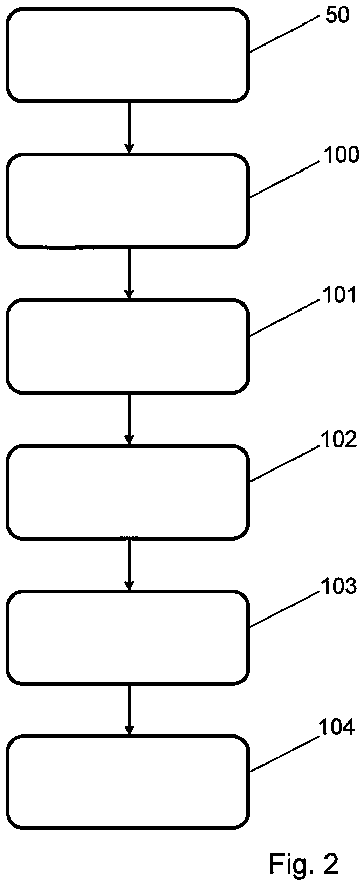

Das erfindungsgemäße Verfahren kann mit der gezeigten Vorrichtung ausgeführt werden, um die gasförmige Struktur 10 zu analysieren, insbesondere um räumliche Informationen umfassend Bewegungsinformationen über die gasförmige Struktur 10 zu gewinnen. Das dazu erfindungsgemäß vorgesehene Verfahren weist mehrere Verfahrensschritte auf, die schematisiert in der folgenden Figur 2 dargestellt sind.

Figur 2 zeigt einen Verfahrensablauf des erfindungsgemäßen Verfahrens beginnend mit einer Bereitstellung 50 einer ersten Kamera 1 zur Aufnahme der gasförmigen Struktur 10 aus einer ersten Aufnahmeachse A und einer zweiten Kamera 2 zur Aufnahme der gasförmigen Struktur 10 aus einer zweiten Aufnahmeachse B, wie in Figur 1 gezeigt. Das Bereitstellen 50 der Kameras 1, 2 kann mit im infraroten Bereich arbeitenden Gaskameras erfolgen, denkbar ist es auch, dass Hyperspektralkameras für Gase verwendet werden, die jedoch teurer sind als Gaskameras. Visuelle Kameras können für Rauch und Dampf verwendet werden. Insbesondere besteht die Möglichkeit, nur eine einzige Kamera bereitzustellen, die mit einem Strahlteiler ausgestattet ist, über den die gasförmige Struktur 10 aus den beiden Aufnahmeachsen A und B ebenfalls aufgenommen werden kann.

Auf das Bereitstellen 50 der Kameras 1 und 2 erfolgen die weiteren Verfahrensschritte mittels des Computersystems 20. Diese beginnen mit dem Erfassen 100 eines ersten Aufnahmebildes A1 aus Richtung der ersten Aufnahmeachse A und eines zweiten Aufnahmebildes B1 aus Richtung der zweiten Aufnahmeachse B.

Anschließend erfolgt der Verfahrensschritt der Vorfilterung 101 der Aufnahmebilder A1, B1, wobei bei der Vorfilterung 101 wenigstens ein Bildrauschen und/oder weitere Störeffekte, insbesondere sogenannte Jitter, aus den Aufnahmebildern A1, B1 reduziert werden.

Der nächste Verfahrensschritt betrifft das Ableiten von Merkmalen 102 über die gasförmige Struktur 10 aus den Aufnahmebildern A1, B1, und zwar mittels a) Differenzbildern umfassend zeitliche Konzentrationsänderungen in der gasförmigen Struktur 10 und b) Bildern des Betrags des optischen Flusses umfassend räumliche Konzentrationsverschiebungen in der gasförmigen Struktur 10.

Differenzbilder werden durch die Bildung der Differenz per Pixel zwischen zwei konsekutiven Bildern gewonnen. Damit werden dynamische Strukturen bzw. Konzentrationsänderungen innerhalb der Gaswolke im Bild hervorgehoben und konstante Strukturen, z. B. starre Objekte im Hintergrund, unterdrückt. Dagegen wird der optische Fluss durch das Finden von Korrespondenzen zwischen zwei konsekutiven Bildern abgeleitet, wobei jedes Pixel und seine Umgebung bei der Korrespondenzbestimmung betrachtet wird. Damit werden räumliche Konzentrationsverschiebungen im Bild pixelweise bestimmt. Nachfolgend wird der Betrag des optischen Flusses pro Pixel berechnet und weiter verwendet.

Da bei der Bildung von Differenzbildern unerwünschte Artefakte im Bild bedingt durch Reflektionen, Licht- oder Temperaturänderungen in der Umgebung der aufgenommenen Szene oder nach der Vorfilterung verbleibender Jitter entstehen können, welche die Bestimmung der räumlichen Informationen über die Gaswolke verschlechtern können, werden räumliche Konzentrationsverschiebungen mittels des optischen Flusses im Bild zusätzlich bestimmt, sodass der Effekt der oben genannten Bildartefakte auf die Bestimmung der räumlichen Informationen unterdrückt werden kann.

Der nächste Verfahrensschritt betrifft das Fusionieren und Bestimmen 103 der Korrespondenzen der abgeleiteten Merkmale mittels einer globalen Zielfunktion und Erzeugen eines Disparitätsbildes, und schließlich erfolgt in einem letzten Verfahrensschritt 104 das Ableiten der räumlichen Information umfassend die Bewegungsinformation über die gasförmige Struktur 10 anhand des Disparitätsbildes.

Die Zielfunktion hängt von der Disparität bzw. der Zuordnung von korrespondierenden Pixeln im Stereo-Bildpaar ab und wird nach der Annahme minimiert, dass ähnliche zeitliche Konzentrationsänderungen und räumliche Konzentrationsverschiebungen im Stereo-Bildpaar vorhanden sind. Nach der Minimierung der Zielfunktion resultiert ein Disparitätsbild, das die optimale -Zuordnung von korrespondierenden Pixeln im Stereo-Bildpaar darstellt. Anhand des Disparitätsbildes und der räumlichen Anordnung des Messsystems werden räumliche Informationen über die Gaswolke im Raum in Bezug auf das Messsystem bestimmt.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten oder räumlicher Anordnungen, können sowohl für sich als auch in den verschiedensten Kombinationen erfindungswesentlich sein.

### Bezugszeichenliste:

- 1: erste Kamera
- 2: zweite Kamera

- 10: gasförmige Struktur
- 11: Hintergrund

- 20: Computersystem

- 50: Bereitstellen wenigstens einer Kamera
- 100: Erfassen eines ersten Aufnahmebildes
- 101: Vorfilterung der Aufnahmebilder
- 102: Ableiten von Merkmalen
- 103: Fusionieren und Bestimmen von Korrespondenzen der abgeleiteten Merkmale
- 104: Ableiten einer räumlichen Information umfassend eine Bewegungsinformation

- A: erste Aufnahmeachse
- B: zweite Aufnahmeachse

- A1: erstes Aufnahmebild
- B1: zweites Aufnahmebild

## Patentansprüche

1. Verfahren zur Bestimmung räumlicher Informationen einer gasförmigen Struktur (10), insbesondere einer Gaswolke, wobei das Verfahren wenigstens die folgenden Schritte umfasst:
- Bereitstellen (50) einer ersten Kamera (1) zur Aufnahme der gasförmigen Struktur (10) aus einer ersten Aufnahmeachse (A) und einer zweiten Kamera (2) zur Aufnahme der gasförmigen Struktur (10) aus einer zweiten Aufnahmeachse (B) oder Bereitstellen einer einzigen Kamera mit einem Strahlteiler, über den die gasförmige Struktur (10) aus der ersten Aufnahmeachse (A) und der zweiten Aufnahmeachse (B) aufgenommen wird,
- Erfassen (100) eines ersten Aufnahmebildes (A1) aus Richtung der ersten Aufnahmeachse (A) und eines zweiten Aufnahmebildes (B1) aus Richtung der zweiten Aufnahmeachse (B),
- Ableiten von Merkmalen (102) über die gasförmige Struktur (10) aus den Aufnahmebildern (A1, B1) mittels
a) Differenzbildern umfassend zeitliche Konzentrationsänderungen in der gasförmigen Struktur (10) und
b) optischen-Fluss basierten Bildern umfassend räumliche Konzentrationsverschiebungen in der gasförmigen Struktur (10),
- Fusionieren und Bestimmen (103) der Korrespondenzen der abgeleiteten Merkmale mittels einer Korrespondenzbestimmung und Erzeugen eines Disparitätsbildes und
- Ableiten einer Bewegungsinformation über die gasförmige Struktur (10) aus der räumlichen Information (104) anhand des Disparitätsbildes.

2. Verfahren nach Anspruch 1,
**dadurch gekennzeichnet,**
**dass** durch das Ableiten der räumlichen Information umfassend die Bewegungsinformation über die gasförmige Struktur (10) die Echtzeitposition der gasförmigen Struktur (10) relativ zur wenigstens einen Kamera (1, 2) bestimmt wird.

3. Verfahren nach Anspruch 1 oder 2,
**dadurch gekennzeichnet,**
**dass** die mittels Differenzbildern und optischen-Fluss-basierten Bildern abgeleiteten Merkmale über die gasförmige Struktur (10) aus den Aufnahmebildern (A1, B1) ohne die Betrachtung eines Hintergrundes (11) der gasförmigen Struktur (10) erfasst und ausgewertet werden.

4. Verfahren nach einem der Ansprüche 1 bis 3,
**dadurch gekennzeichnet,**
**dass** das Fusionieren und Bestimmen der Korrespondenzen der abgeleiteten Merkmale mittels der Korrespondenzbestimmung, und/oder einer lokalen oder globalen Zielfunktion zwischen den Aufnahmebildern (A1, B1) für alle Pixel der Aufnahmebilder (A1, B1) numerisch mit einem Computersystem (20) vorgenommen wird.

5. Verfahren nach einem der vorgenannten Ansprüche,
**dadurch gekennzeichnet,**
**dass** die globale Zielfunktion aus einer Summe einer erstellten Kostenfunktion und einer definierten Regularisierungsfunktion bestimmt wird, abhängig von einer Zuordnung von aus den Aufnahmebildern (A1, B1) korrespondierenden Pixeln.

6. Verfahren nach einem der vorgenannten Ansprüche,
**dadurch gekennzeichnet,**
**dass** die beiden Kameras (1, 2) zueinander und relativ zur gasförmigen Struktur (10) zur Ausführung einer Epipolargeometriemessung ausgerichtet werden.

7. Verfahren nach einem der vorgenannten Ansprüche,
**dadurch gekennzeichnet,**
**dass** vor dem Ableiten von Merkmalen (102) über die gasförmige Struktur (10) aus den Aufnahmebildern (A1, B1) eine Vorfilterung (101) der Aufnahmebilder (A1, B1) ausgeführt wird, wobei wenigstens ein Bildrauschen und/oder weitere Störeffekte aus den Aufnahmebildern (A1, B1) reduziert werden.

8. Verfahren nach einem der vorgenannten Ansprüche,
**dadurch gekennzeichnet,**
**dass** die Kameras (1, 2) als Infrarot-Gaskameras und/oder als Hyperspektralkameras und/oder als visuelle Kameras für Rauch und Dampf bereitgestellt werden.

9. Vorrichtung zur Bestimmung räumlicher Informationen einer gasförmigen Struktur (10), insbesondere einer Gaswolke, aufweisend eine erste Kamera (1) zur Aufnahme der gasförmigen Struktur (10) aus einer ersten Aufnahmeachse (A) und aufweisend eine zweite Kamera (2) zur Aufnahme der gasförmigen Struktur (10) aus einer zweiten Aufnahmeachse (B) oder aufweisend eine einzige Kamera mit einem Strahlteiler, über den die gasförmige Struktur (10) aus der ersten Aufnahmeachse (A) und der zweiten Aufnahmeachse (B) aufnehmbar ist, wobei die Vorrichtung weiterhin ein Computersystem (20) aufweist, das mit der wenigstens einen Kamera (1, 2) in Verbindung steht und auf dem ein Verfahren gemäß einem der Ansprüche 1 bis 8 ausführbar ist.

## Claims

1. A method for determining spatial information of a gaseous structure (10), in particular a gas cloud, wherein the method comprises at least the following steps:
- providing (50) a first camera (1) for recording the gaseous structure (10) from a first recording axis (A) and a second camera (2) for recording the gaseous structure (10) from a second recording axis (B), or providing a single camera with a beam splitter via which the gaseous structure (10) is recorded from the first recording axis (A) and the second recording axis (B),
- capturing (100) a first recorded image (A1) from the direction of the first recording axis (A) and a second recorded image (BI) from the direction of the second recording axis (B),
- deriving features (102) about the gaseous structure (10) from the recorded images (A1, BI) by means of
a) difference images comprising temporal concentration changes in the gaseous structure (10) and
b) optical-flow based images comprising spatial concentration shifts in the gaseous structure (10)
- merging and determining (103) the correspondences of the derived features using a correspondence determination and generating a disparity image and
- deriving a movement information about the gaseous structure (10) from the spatial information (104) on the basis of the disparity image.

2. The method according to claim 1,
**characterized in that**
by deriving the spatial information comprising the movement information about the gaseous structure (10), the real-time position of the gaseous structure (10) relative to the at least one camera (1, 2) is determined.

3. The method according to claim 1 or 2,
**characterized in that**
the features of the gaseous structure (10) derived by means of difference images and optical-flow-based images are gathered from the recorded images (A1, BI) and evaluated without the observation of a background (11) of the gaseous structure (10).

4. The method according to one of the claims 1 to 3,
**characterized in that**
the merging and determination of the correspondences of the derived features by means of correspondence determination and/or a local or global objective function between the recorded images (A1, BI) for all pixels of the recorded images (A1, BI) is performed numerically with a computer system (20).

5. The method according to one of the aforementioned claims,
**characterized in that**
the global objective function is determined from a sum of a generated cost function and a defined regularization function, depending on an assignment of corresponding pixels from the recorded images (A1, BI).

6. The method according to one of the aforementioned claims,
**characterized in that**
the two cameras (1, 2) are aligned with each other and relative to the gaseous structure (10) to carry out an epipolar geometry measurement.

7. The method according to one of the aforementioned claims,
**characterized in that**
before deriving features (102) about the gaseous structure (10) from the recorded images (A1, BI) a pre-filtering (101) of the recorded images (A1, BI) is carried out, wherein at least an image noise and/or other interference effects are reduced in the recorded images (A1, BI).

8. The method according to one of the aforementioned claims,
**characterized in that**
the cameras (1, 2) are provided as infrared gas cameras and/or as hyperspectral cameras and/or as visual cameras for smoke and steam.

9. A device for determining spatial information of a gaseous structure (10), in particular of a gas cloud, comprising a first camera (1) for recording the gaseous structure (10) from a first recording axis (A) and comprising a second camera (2) for recording the gaseous structure (10) from a second recording axis (B) or comprising a single camera with a beam splitter, via which the gaseous structure (10) can be recorded from the first recording axis (A) and the second recording axis (B), wherein the device further comprises a computer system (20) which is connected to the at least one camera (1, 2) and on which a method according to one of claims 1 to 8 can be carried out.

## Revendications

1. Procédé de détermination d'informations spatiales d'une structure gazeuse (10), en particulier d'un nuage de gaz, le procédé comprenant au moins les étapes suivantes :
- fournir (50) une première caméra (1) pour enregistrer la structure gazeuse (10) à partir d'un premier axe d'enregistrement (A) et une deuxième caméra (2) pour enregistrer la structure gazeuse (10) à partir d'un deuxième axe d'enregistrement (B), ou fournir une seule caméra avec un séparateur de faisceau par lequel la structure gazeuse (10) est enregistrée à partir du premier axe d'enregistrement (A) et du deuxième axe d'enregistrement (B),
- acquérir (100) une première image enregistrée (A1) dans la direction du premier axe d'enregistrement (A) et une deuxième image enregistrée (B1) dans la direction du deuxième axe d'enregistrement (B),
- dériver des caractéristiques (102) de la structure gazeuse (10) à partir des images enregistrées (A1, B1) au moyen
a) d'images différentielles comprenant des changements de concentration temporels dans la structure gazeuse (10) et
b) des images basées sur le flux optique comprenant des décalages de concentration spatiale dans la structure gazeuse (10),
- fusionner et déterminer (103) les correspondances des caractéristiques dérivées en utilisant une détermination de correspondance et générer une image de disparité et
- dériver une information de mouvement sur la structure gazeuse (10) de l'information spatiale (104) au moyen de l'image de disparité.

2. Procédé selon la revendication 1,
**caractérisé en ce qu'**
en dérivant l'information spatiale comprenant l'information de mouvement concernant la structure gazeuse (10), l'on détermine la position en temps réel de la structure gazeuse (10) par rapport à l'au moins une caméra (1, 2).

3. Procédé selon la revendication 1 ou 2,
**caractérisé en ce que**
les caractéristiques concernant la structure gazeuse (10) dérivées au moyen d'images de différence et d'images basées sur le flux optique sont détectées et évaluées à partir des images enregistrées (A1, B1) sans observation d'un arrière-plan (11) de la structure gazeuse (10).

4. Procédé selon l'une des revendications 1 à 3,
**caractérisé en ce que**
la fusion et la détermination des correspondances des caractéristiques dérivées au moyen de la détermination des correspondances et/ou d'une fonction objectif locale ou globale entre les images enregistrées (A1, B1) pour tous les pixels des images enregistrées (A1, B1) sont effectuées numériquement avec un système informatique (20).

5. Procédé selon l'une des revendications précédentes,
**caractérisé en ce que**
la fonction d'objectif globale est déterminée à partir d'une somme d'une fonction de coût générée et d'une fonction de régularisation définie, en fonction d'une affectation de pixels correspondants provenant des images enregistrées (A1, BI).

6. Procédé selon l'une des revendications précédentes,
**caractérisé en ce que**
les deux caméras (1, 2) sont alignées entre elles et par rapport à la structure gazeuse (10) pour effectuer une mesure de géométrie épipolaire.

7. Procédé selon l'une des revendications précédentes,
**caractérisé en ce qu'**
avant la dérivation de caractéristiques (102) concernant la structure gazeuse (10) à partir des images enregistrées (A1, B1), un pré-filtrage (101) des images enregistrées (A1, B1) est effectué, où au moins le bruit d'image et/ou d'autres effets d'interférence sont réduits dans les images enregistrées (A1, B1).

8. Procédé selon l'une des revendications précédentes,
**caractérisé en ce que**
les caméras (1, 2) sont fournies en tant que caméras infrarouges à gaz et/ou en tant que caméras hyperspectrales et/ou en tant que caméras visuelles pour la fumée et la vapeur.

9. Dispositif pour déterminer des informations spatiales d'une structure gazeuse (10), en particulier d'un nuage de gaz, comportant une première caméra (1) pour l'enregistrement de la structure gazeuse (10) à partir d'un premier axe d'enregistrement (A) et une deuxième caméra (2) pour l'enregistrement de la structure gazeuse (10) à partir d'un deuxième axe d'enregistrement (B) ou comportant une seule caméra avec un séparateur de faisceau, par lequel la structure gazeuse (10) peut être enregistrée à partir du premier axe d'enregistrement (A) et du deuxième axe d'enregistrement (B), où le dispositif comprend en outre un système informatique (20) qui est connecté à l'au moins une caméra (1, 2) et sur lequel un procédé selon l'une des revendications 1 à 8 est exécutable.
